# EUROPÄISCHE PATENTSCHRIFT

(11) **EP 1 656 726 B1**
(45) Veröffentlichungstag und Bekanntmachung des Hinweises auf die Patenterteilung: **25.04.2012**
(21) Anmeldenummer: 04766492.5
(22) Anmeldetag: 13.08.2004
(51) Int. Cl.: H02K 3/52, H02K 15/095

(54) **RELUKTANZMOTOR UND VERFAHREN ZUM WICKELN EINES RELUKTANZMOTORS**
RELUCTANCE MOTOR AND METHOD FOR WINDING A RELUCTANCE MOTOR
MOTEUR A RELUCTANCE ET PROCEDE POUR BOBINER UN MOTEUR A RELUCTANCE

(30) Priorität: 18.08.2003 DE 10337916
(43) Veröffentlichungstag der Anmeldung: 17.05.2006
(60) Teilanmeldung: 06120091.1
(73) Patentinhaber: Vorwerk & Co. Interholding GmbH, 42275 Wuppertal (DE)
(72) Erfinder: CALDEWEY, Uwe, D-44229 Dortmund (DE); LIENENLÜKE, Paul, D-45549 Sprockhövel (DE); THEUERMANN, Volker, 58455 Witten (DE)
(74) Vertreter: Müller, Enno
(86) Internationale Anmeldenummer: PCT/EP2004/051789
(87) Internationale Veröffentlichungsnummer: WO 2005/020408

(56) Entgegenhaltungen:
- EP-A- 0 501 516
- EP-A- 1 107 429
- EP-A- 1 235 327
- WO-A-02/052693
- WO-A-03/021744
- DE-U- 20 022 406
- JP-A- 2001 055 949
- US-A- 4 287 446
- US-A- 4 673 834
- US-A- 5 996 209
- US-B1- 6 407 474
- PATENT ABSTRACTS OF JAPAN Bd. 1996, Nr. 03, 29. März 1996 (1996-03-29) -& JP 07 298529 A (SANYO DENKI CO LTD), 10. November 1995 (1995-11-10)
- PATENT ABSTRACTS OF JAPAN Bd. 1998, Nr. 03, 27. Februar 1998 (1998-02-27) & JP 09 308207 A (TEC CORP), 28. November 1997 (1997-11-28)
- PATENT ABSTRACTS OF JAPAN Bd. 016, Nr. 465 (E-1270), 28. September 1992 (1992-09-28) & JP 04 165947 A (SECOH GIKEN INC), 11. Juni 1992 (1992-06-11)

## Beschreibung

Die Erfindung betrifft einen Reluktanzmotor nach den Merkmalen des Oberbegriffes des Anspruches 1.

Reluktanzmotoren der in Rede stehenden Art sind bekannt. So wird beispielsweise auf die DE 100 35 540 A1 verwiesen. Dort ist ein Reluktanzmotor dargestellt und beschrieben, welcher zur Reduzierung der Schallemission bei Betrieb des Motors einen Statorabdeckkörper aufweist, der den Zwischenraum zwischen zwei benachbarten Statorspulen ausfüllt. Dieser Statorabdeckkörper ist im Wesentlichen als Hohlzylinder ausgebildet und weist eine der Spulenzahl entsprechende Anzahl von Wickelkernschuhen auf, welche im Wesentlichen außenseitig eines zylindrischen Grundkörpers parallel zur Körperachse des Statorabdeckkörpers ausgerichtet angeordnet sind. Der Statorabdeckkörper dient bei dieser bekannten Lösung zunächst als Wickelkörper. Der mit den um den Wickelkernschuhen aufgewickelten Statorwicklungen versehene Statorabdeckkörper wird abschließend in axialer Richtung in den Statorkern eingeschoben.

Der Statorabdeckkörper ist einteilig ausgebildet. Besondere Maßnahmen zur (rückwärtigen) Wickeldrahtführung sind nicht vorgesehen.

Aus der JP 7298529 A (Patent abstracts of Japan) ist ein unter horizontaler Teilung zweiteiliger Statorabdeckkörper bekannt. Besondere (rückwärtige) Maßnahmen für die Wickeldrahtführung sind nicht vorgesehen. Bei den aus der WO03/021744 A bekannten Statorabdeckkörpern sind rückwärtig Wickeldrähte herausgeführt. Weitere besondere Maßnahmen sind nicht getroffen. Gleiches gilt im Hinblick auf die EP-A-1235327.

Der Erfindung stellt sich die Aufgabe, den bekannten Reluktanzmotor insbesondere in fertigungstechnischer Hinsicht weiter zu verbessern.

Diese Aufgabe ist beim Gegenstand des Anspruches 1 gelöst, wobei darauf abgestellt ist, dass der Statorabdeckkörper zweiteilig ausgebildet ist und beide Teile gegensinnig in axialer Richtung in den Statorkern eingeschoben sind, unter gegenseitiger Überlappung der einander zugeordneten Enden, und dass außenseitig der Rückwand eines Statorabdeckkörpers ein umlaufender, partiell unterbrochener Kragen und eine Wickeldrahtführung ausgebildet ist, wobei hierzu hakenartige, auf den Kragen weisende Rückhaltelemente vorgesehen sind.

Der Reluktanzmotor ist insbesondere hinsichtlich der Fertigung des Stators vereinfacht. So ist der Statorabdeckkörper in axialer Richtung zweigeteilt, so dass sich zwei in Decklage bringbare, an die Innenkontur des Statorkerns angepasste Abdeckkörper-Halbteile ergeben, wobei ein Abdeckkörper-Halbteil von axial oben und das andere Abdeckkörper-Halbteil von axial unten in den Statorkern eingeschoben ist. Die einander zugeordneten Enden bzw. die einander zugeordneten Konturen der Abdeckkörper-Halbteile sind so ausgeformt, dass diese ineinander steckbar sind. Die Randkonturen des einen Abdeckkörper-Halbteils sind so ausgebildet, dass diese in die zugeordneten Enden des anderen Abdeckkörper-Halbteils eintauchen können. Dies ist beispielsweise durch konturäußere bzw. konturinnere Materialreduzierungen im Bereich der zugeordneten Enden erreicht. Die hierdurch gebildete Überlappung im Bereich der einander zugeordneten Enden ist in axialer Richtung so bemessen, dass Toleranzen hinsichtlich der Statorkernhöhe ausgeglichen werden können. Durch die variable Überlappung können beispielsweise Toleranzen von -1 mm bis +1 mm, bevorzugt 0,4 bis 0,5 mm ausgeglichen werden. Der zweiteilig ausgebildete Statorabdeckkörper ist zudem formschlüssig in den Statorkern eingeschoben, wobei weiter drehwinkelmäßig die Zuordnung zumindest eines Abdeckkörper-Halbteiles zum Statorkern beliebig ist, da sowohl der Statorkern als auch der Statorabdeckkörper symmetrisch ausgestaltet ist. So kann bei einem mit acht Statorspulen zu versehenen und entsprechend ausgebildeten Statorabdeckkörper zumindest das eine Abdeckkörper-Halbteil in acht verschiedenen Positionen, also beliebig, montiert werden. In vorteilhafter Weise ist weiter vorgesehen, dass ein Wickelkern an seinen gegenüberliegenden axialen Stirnflächen durch jeweils einen der Statorabdeckkörper überfangen ist. Die beiden Abdeckkörper-Halbteile formen aus dem Stand der Technik bekannte Wickelkernschuhe aus, welche entsprechend der Zweiteiligkeit des Statorabdeckkörpers gleichfalls in axialer Richtung zweigeteilt sind. So umfasst jeder Wickelkern-Halbschuh eines Abdeckkörper-Halbteils den zugeordneten Wickelkern, sowohl den Stirnflächenbereich als auch die sich gegenüberliegenden Flachseitenbereiche, letztere jedoch nur über ihre halbe axiale Länge. Die Wickelkerne liegen rotorseitig, das heißt nach radial innen frei. Die beiden Abdeckkörper-Halbteile können mit Ausnahme der Überlappungsausformungen in den einander zugeordneten Enden gleich ausgebildet sein. Bevorzugt wird eine Ausgestaltung, bei welcher ein Statorabdeckkörper als Oberteil ausgebildet ist, wobei in einer den Statorwicklungen zugeordneten Rückwand eine Durchführausnehmung für den Wickeldraht ausgebildet ist. Die die Wickelkerns umfassenden Wickelkernschuhe sind jeweils mit einem entlang ihrer radial inneren Randkante verlaufenden Abdeckschild versehen, wobei jedes einzelne Abdeckschild im Grundriss des Abdeckkörpers eine Kreisabschnittsform mit einem sich auf die Mittelachse des Stators beziehenden Radius aufweist. Die Abdeckschilde sind umfangsmäßig mit geringem Abstand zueinander angeordnet, so dass sich ein dem Rotor zugewandter, nahezu geschlossener Zylinderraum ergibt. Mit radialem Abstand, welcher radiale Abstand im Wesentlichen der radialen Tiefe eines Wickelkerns entspricht, verläuft hinter den Abdeckschildern der Wickelkernschuhe eine umlaufende Rückwand. Zwischen dieser Rückwand und einem Abdeckschild sind die, den Wickelkernschuh umfassenden Statorwicklungen gefasst. Zum Herausführen des die Statorspule bildenden Drahtes ist in der Rückwand eine bevorzugt talartige, das heißt zum freien Ende der Rückwand hin offene, sich erweiternde Durchführausnehmung vorgesehen. Diese erstreckt sich weiter bevorzugt bis auf das Niveau des die axiale Stirnfläche des Wickelkerns überfangenden Abschnitts des Wickelkernschuhs. Zum Zuführen eines Wickeldrahtes zur Statorspule ist weiter vorgesehen, dass zwischen zwei Statorspulen in der Rückwand des Statorabdeckkörpers eine Durchführausnehmung ausgebildet ist. Diese kann gleich der zuvor beschriebenen Durchführungsausnehmung talförmig ausgebildet sein. Bevorzugt wird jedoch eine schlitzartige, zum freien Ende der Rückwand hin offene Ausnehmung. Zur Lagesicherung der radial außen entlang der Rückwand zu den Statorspulen bzw. von diesen weggeführten Wickeldrähte ist außenseitig der Rückwand des Oberteils die Wickeldrahtführung ausgebildet, welche so ausgelegt ist, dass eine Verlagerung (Abrutschen) der Wickeldrähte in axialer Richtung über die umlaufende Rückwand hinaus unterbunden ist. Hierzu sind außenseitig der Rückwand des Oberteils die hakenartigen Rückhalteelemente angeformt sein. So wird bevorzugt, dass die Wickeldrahtführung aus einer Vielzahl von gesonderten Wickeldrahtführungselementen besteht. Als besonders vorteilhaft erweist sich die Ausbildung des zweiteiligen Statorabdeckkörpers in Form eines Kunststoffspritzteiles. So kann weiter an das Oberteil ein Anschlussstecker für die Statorspulen angeformt sein. Bevorzugt ist dieser Anschlussstecker nach radial außen vom eigentlichen Statorabdeckkörper abgekröpft angeordnet. Diese erfindungsgemäße Ausgestaltung dient zusammen mit der Wickeldrahtführung als Verdrahtungshilfe. Der angeformte, insbesondere angespritzte Anschlussstecker ist weiter bevorzugt als Nachbildung eines Platinenrandes zur Kontaktierung mit einem Platinenrandstecker ausgebildet. Dieser Anschlussstecker weist hierzu eine Vielzahl von metallischen Kontaktelementen auf. Bevorzugt wird diesbezüglich jedoch eine Ausgestaltung, bei welcher die Kontaktelemente nach Aushärtung des Anschlusssteckers eingesetzt werden. Dadurch bedingt, dass erfindungsgemäß ein zweiteiliger Statorabdeckkörper vorgesehen ist, erfolgt die Wicklung der Statorspulen in in den Statorkern eingesetztem Zustand der Statorabdeckkörper, zufolge dessen eine Innenwickelmaschine zur Anwendung kommt. Durch dieses Innenwickeln und eine weiter vorgesehene automatische Verdrahtung mit dem Anschlussstecker ist eine Reduktion der Anschlüsse realisierbar. Dementsprechend weist der Anschlussstecker weniger Kontaktelemente als der Stator Statorspulen auf. So ist bei einem Stator mit acht Statorspulen ein Anschlussstecker mit sechs Kontaktelementen vorgesehen. Weiter vorteilhaft erweist sich eine Ausgestaltung, bei welcher das Oberteil Befestigungsnoppen aufweist zum Schmelzumformbefestigen beispielsweise einer Steuerungsplatine. Hieraus ergibt sich eine kurze Toleranzkette zum Stator, da durch die im Zuge der Herstellung des Statorabdeckkörpers, insbesondere im Zuge des Spritzvorganges die Befestigungsnoppen exakt positioniert werden. Das Ausrichten beispielsweise einer anzuordnenden Steuerungsplatine zu dem Statorabdeckkörper bzw. zu weiteren Bauteilen des Reluktanzmotors entfällt, dies bei einer sehr hohen Positionsgenauigkeit. Auch ist vorgesehen, dass die Statorabdeckkörper bzw. die Abdeckkörper-Halbteile jeweils eine Einstecktiefenbegrenzung aufweisen, welche beispielsweise in Form einer fußseitig der umlaufenden Rückwand angeformten Radialschulter ausgebildet sein kann. Letztere dient darüber hinaus auch zur Beabstandung der außenseitig über die Rückwand geführten Wickeldrähte zum Statorkern. Schließlich ist vorgesehen, dass ein Statorabdeckkörper als Unterteil ausgebildet ist und dass das Unterteil in jeder Statorkernstellung in das Oberteil einpasst. Auch dieses Unterteil weist bevorzugt eine radial abragende Einstecktiefenbegrenzung auf.

Nachstehend ist die Erfindung anhand der beigefügten Zeichnungen, welche lediglich ein Ausführungsbeispiel darstellen, näher erläutert. Es zeigt:
- Fig.1: einen Reluktanzmotor in perspektivischer Zusanmnenbaudarstellung;
- Fig. 2: den Reluktanzmotor in perspektivischer Explosionsdarstellung;
- Fig. 3: einen zusammengesetzten, zweiteilig ausgebildeten Statorabdeckkörper in Perspektive;
- Fig. 4: das Oberteil des zweiteiligen Statorabdeckkörpers in Perspektive;
- Fig. 5: das Unterteil des zweiteiligen Statorabdeckkörpers in Perspektive;
- Fig. 6: das Statorabdeckkörper-Oberteil in Seitenansicht;
- Fig. 7: das Statorabdeckkörper-Oberteil in Draufsicht;
- Fig. 8: den vergrößerten Schnitt gemäß der Linie VIII - VIII in Fig. 7;
- Fig. 9: den herausvergrößerten Bereich IX in Fig. 7;
- Fig. 10: den vergrößerten Schnitt gemäß der Linie X - X in Fig. 9;
- Fig. 11: das Statorabdeckkörper-Unterteil in Seitenansicht;
- Fig. 12: das Statorabdeckkörper-Unterteil in Draufsicht;
- Fig. 13: den vergrößerten Schnitt gemäß der Linie XIII - XIII in Fig. 12;
- Fig. 14: den vergrößerten Schnitt gemäß der Linie XIV - XIV in Fig. 12;
- Fig. 15: den vergrößerten Schnitt gemäß der Linie XV - XV in Fig. 12;
- Fig. 16: die Draufsicht auf den zusammengesetzten Stator, bestehend aus einem Statorkern, dem Statorwicklungen tragenden Statorabdeckkörper sowie einer an dem Statorabdeckkörper befestigten Platine;

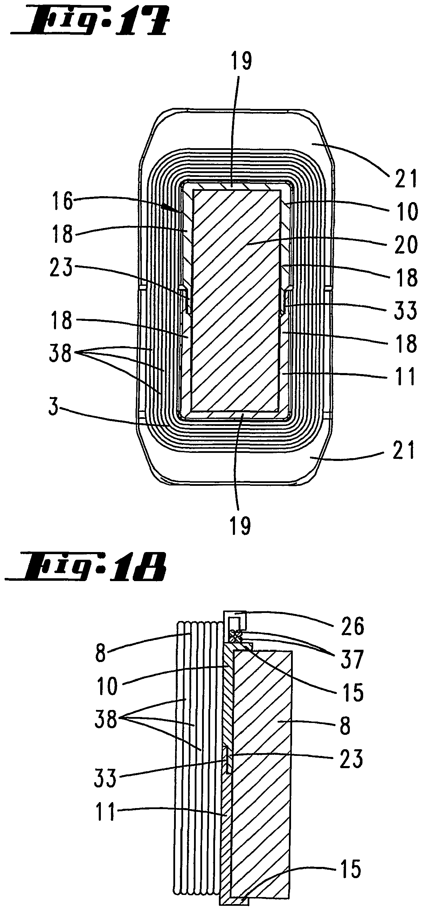

- Fig. 17: den Schnitt gemäß der Linie XVII - XVII in Fig. 16;
- Fig. 18: den Schnitt gemäß der Linie XVIII - XVIII in Fig. 16;

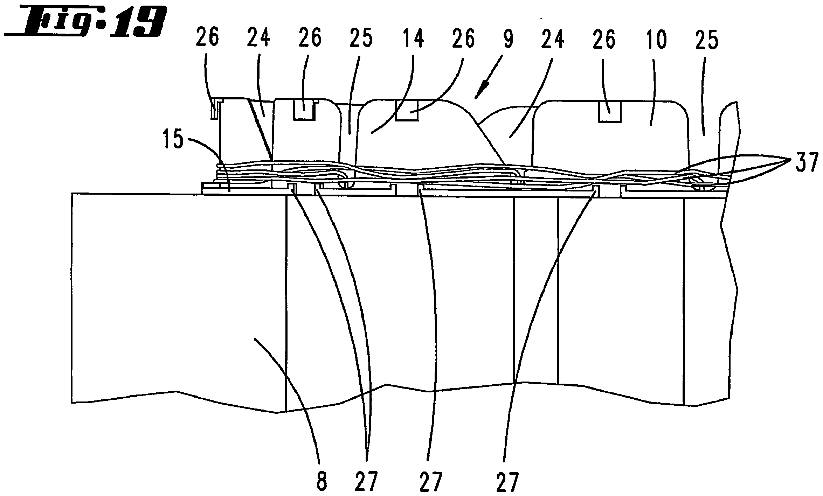

- Fig. 19: eine vergrößerte Seitenansichtsdarstellung des zusammengesetzten Stators;

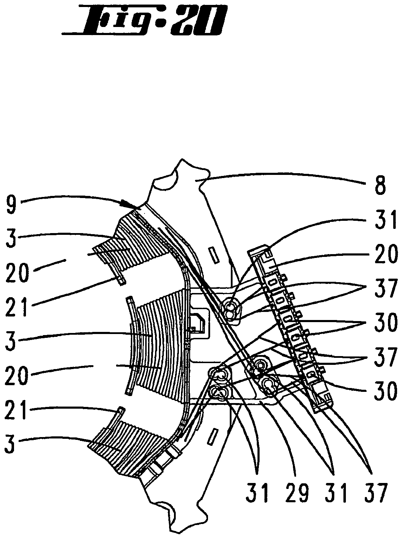

- Fig. 20: eine Herausvergrößerung des Bereiches XX in Fig. 16, unter Fortlassung der in Fig. 16 dargestellten Platine;
- Fig. 21: die Unteransicht des in Fig. 20 dargestellten Bereiches mit Blick auf unterseitig der Platine angeordnete Lichtschranken;
- Fig. 22: ein Motorschaltbild zur Darstellung der Anschlüsse der einzelnen Statorspulen und
- Fig. 23: ein Elektronikschaltbild zur Darstellung der Ansteuerung der einzelnen Statorspulen.

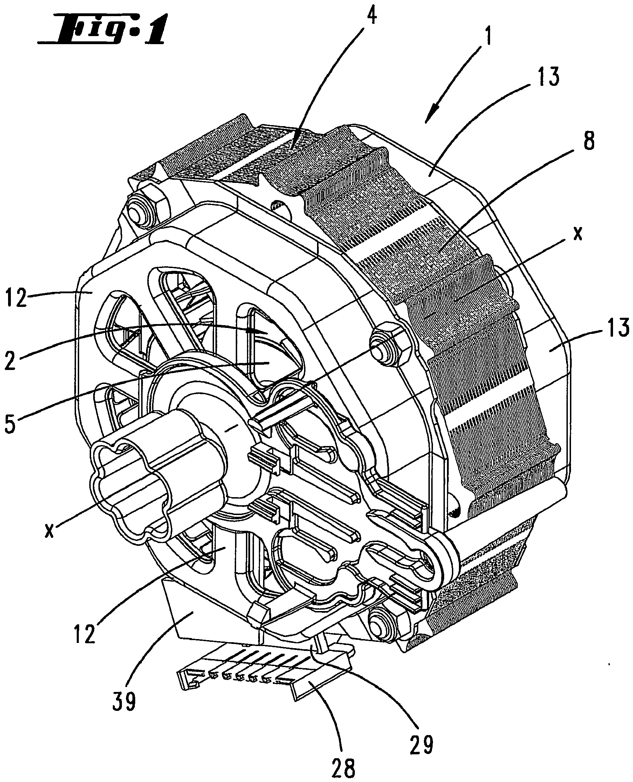

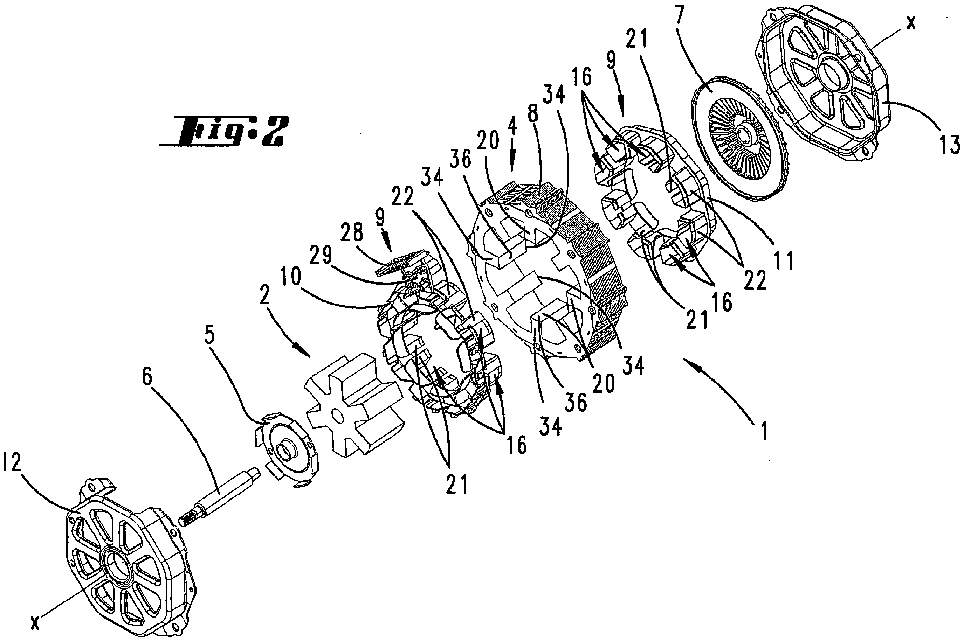

Dargestellt und beschrieben ist zunächst mit Bezug zu den Fig.1 und 2 ein Reluktanzmotor 1 in Form eines 8/6-Reluktanzmotors mit einem sechspoligen Rotor 2 und einem, acht Statorspulen 3 aufweisenden Stator 4.

Wie aus der Explosionsdarstellung in Fig. 2 zu erkennen, weist der Reluktanzmotor 1 neben dem erwähnten Rotor 2 im Wesentlichen noch eine Geberscheibe 5, einen Rotorachskörper 6, sowie einen Lüfter 7 auf. Geberscheibe 5, Rotor 2 und Lüfter 7 sind drehfest zueinander auf dem Rotorachskörper 6 befestigt und koaxial zu einer Rotordrehachse x angeordnet.

Der gleichfalls koaxial zur Rotordrehachse x ausgerichtete Stator 4 setzt sich im Wesentlichen aus einem Statorkern 8 und einem, die in Fig. 2 nicht dargestellten Statorspulen 3 tragenden, zweiteiligen Statorabdeckkörper 9 zusammen. Letzterer ist gebildet durch ein Abdeckkörper-Oberteil 10 und ein Abdeckkörper-Unterteil 11, welche beiden Abdeckkörperteile 10 und 11 durch topfartige Brücken 12 und 13 überdeckt werden. Letztere formen zugleich Lagerungen für den Rotorachskörper 6 aus.

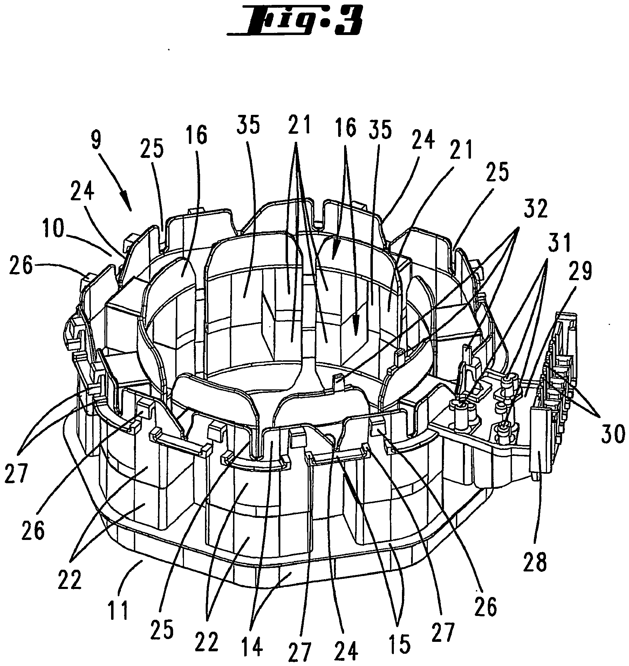

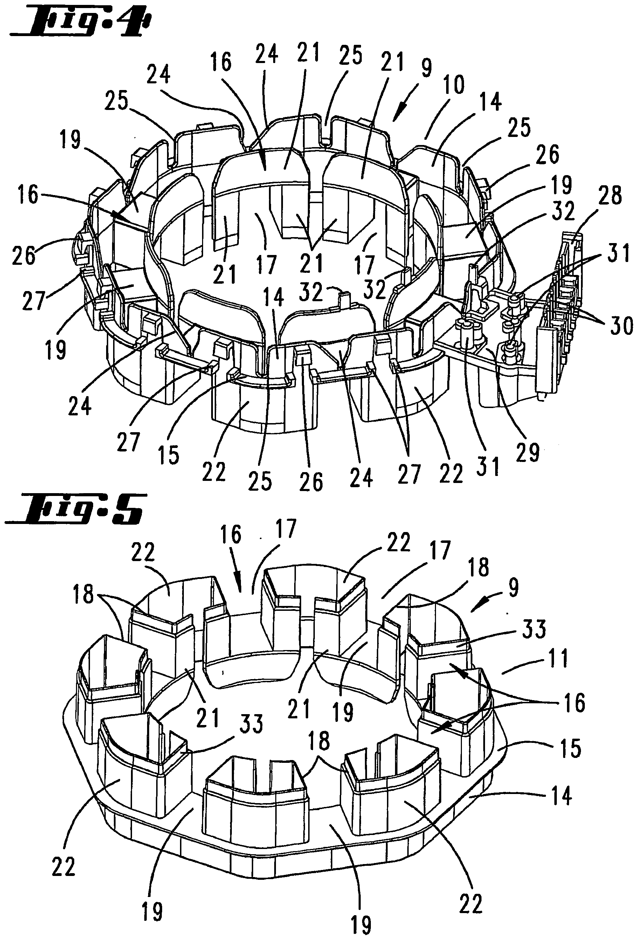

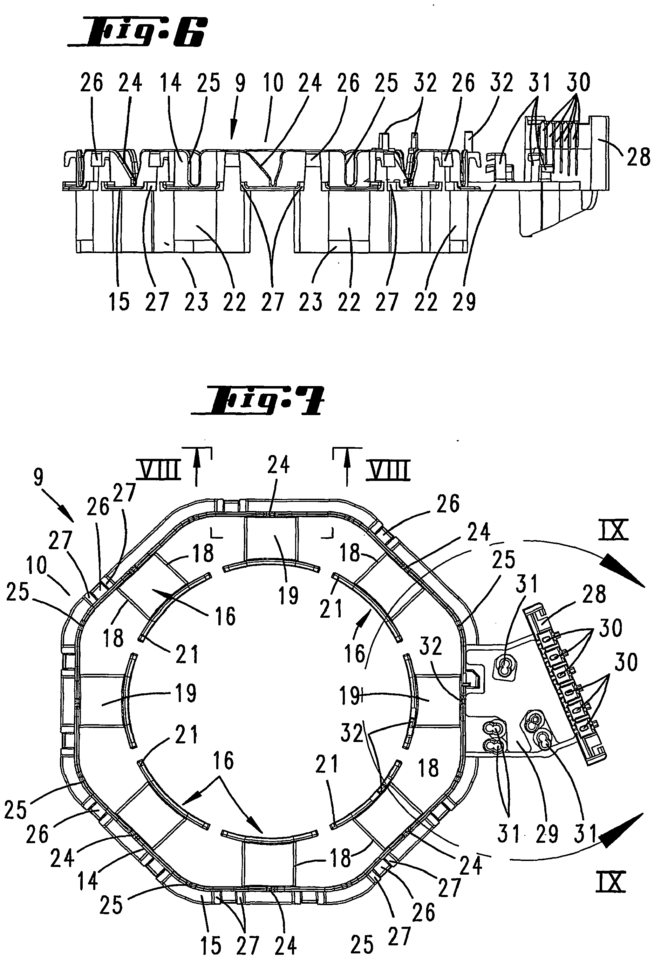

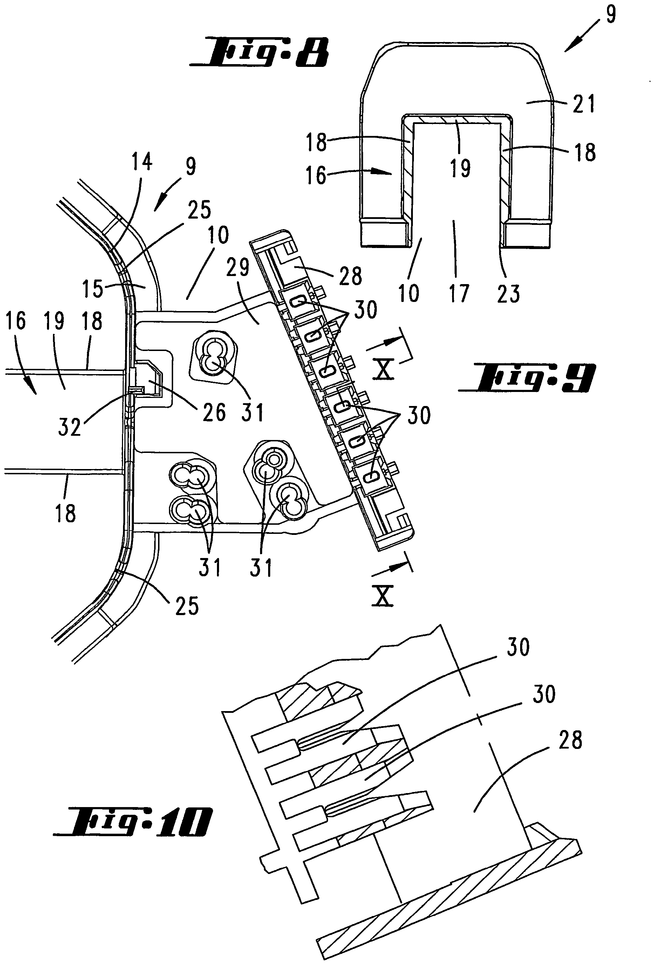

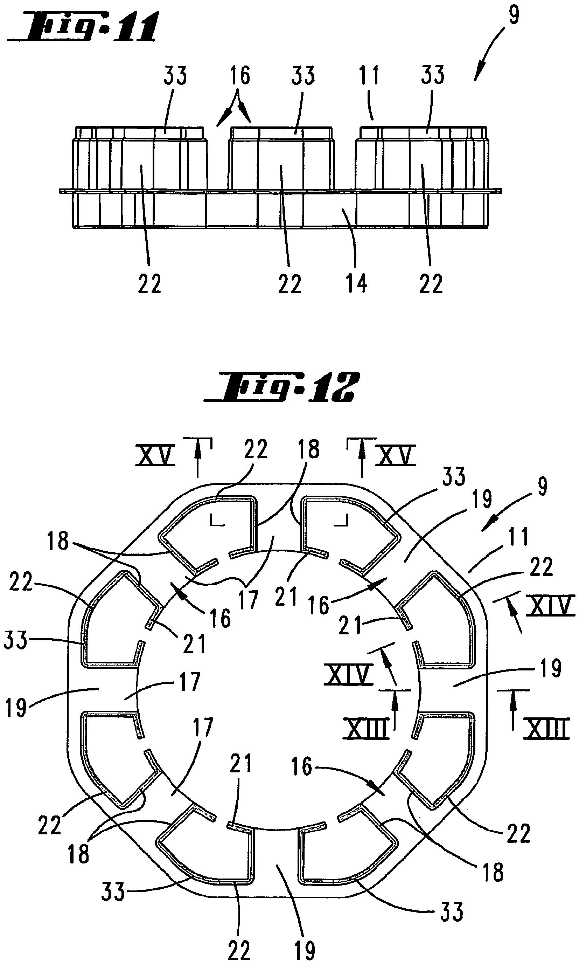

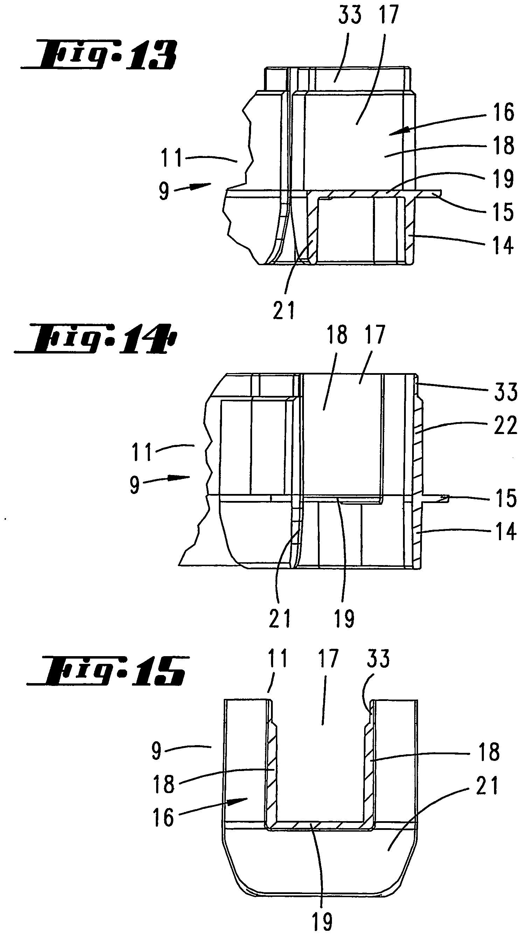

Anhand der Fig. 3 bis 15 wird der zweiteilige Statorabdeckkörper 9 näher beschrieben.

Das Oberteil 10 ist im Grundriss im Wesentlichen achteckig mit verrundeten Kanten ausgebildet, wobei zunächst eine umlaufende, partiell unterbrochene Rückwand 14 vorgesehen ist, an welcher fußseitig radial nach außen ein umlaufender, gleichfalls partiell unterbrochener Kragen 15 angeformt ist.

Jeweils zwischen zwei Eckzonen sind fußseitig der Rückwand 14 radial nach innen weisende Wickelkernschuhe 16 angeformt, die sich in axialer Richtung von der Rückwand-Fußlinie ausgehend nach radial innen des Oberteils 10 erstrecken.

Jeder Wickelkernschuh 16 ist im Querschnitt U-förmig gestaltet mit einer nach unten, das heißt zu der Rückwand 14 abgewandten U-ÖHnung 17. Die beiden parallel zueinander beabstandeten U-Schenkel 18 und der diese verbindende, in der Ebene der Fußlinie der Rückwand 14 sich erstreckende U-Steg 19 weisen eine Tiefe auf, die der radialen Tiefe eines zuordbaren Wickelkerns 20 des Statorkerns 8 entspricht. Auch der parallele Abstand der U-Schenkel 18 zueinander ist an das Breitenmaß eines Wickelkerns 20 angepasst. Der Abstand des U-Steges 19 bis zur Ebene der U-Üffnung und somit die in Achsrichtung gemessene Länge jedes U-Schenkels 18 eines Wickelkernschuhs 16 ist geringfügig größer gewählt als die halbe axiale Höhe eines Wickelkerns 20.

An den nach radial innen weisenden Randkanten der U-Schenkel 18 und des U-Stegs 19 ist außenrandseitig ein entsprechend im Grundriss U-förmiges Abdeckschild 21 angeformt, wobei der dem U-Steg 19 zugeordnete Abschnitt des Abdeckschilds 21 eine radial zu diesem durch den U-Steg 19 beabstandeten Rückwand 14 entsprechende Höhe aufweist.

Im Grundriss des Abdeckkörper-Oberteils 10 betrachtet, sind die Abdeckschilde 21 so ausgerichtet, dass diese jeweils zum benachbarten Abdeckschild 21 beabstandet sind und insgesamt einen durch regelmäßige Axialschlitze unterbrochenen Hohlzylinder ausformen, in welchem der Rotor 2 frei drehbar ist.

Das umfangsmäßige Beabstandungsmaß zwischen zwei Abdeckschilden 21 beträgt etwa 1/4 bis 1/6 der Umfangslänge eines Abdeckschildes 21.

Die einander zugewandten U-Schenkel 18 zweier benachbarter Wickelkernschuhe 16 sind über eine, sich im Wesentlichen in der Vertikalebene der Rückwand 14 erstreckende Abdeckwand 22 verbunden.

Die beiden U-Schenkel 18, die Abdeckwand 22 und die zwei zugewandten Flügel der Abdeckschilde 21 zweier benachbarter Wickelkernschuhe 16 bilden in ihrem, der U-Öffnung 17 der Wickelkernschuhe 16 zugewandten Endbereich eine Fügekontur für das Unterteil 11 aus, wozu entlang der so gebildeten Linie durch Materialreduzierung eine Stufe 23 gebildet ist, mit einer in Achsrichtung gemessenen Länge von ca. 0,5 mm. Durch die Stufe 23 ist beispielsweise im Bereich der U-Schenkel 18 ein Versatz in Richtung der zugeordneten U-Öffnung 17 erreicht, wobei dieser Versatz der halben Materialstärke entspricht.

Wie bereits angedeutet, ist die Rückwand 14 in Umfangsrichtung partiell unterbrochen. So sind mittig eines jeden U-Stegs 19 eines Wickelkernschuhs 16 talförmige Durchftihrausnehmungen 24 vorgesehen, welche sich von der Fußlinie der Rückwand 14 ausgehend zum freien Ende der Rückwand 14 hin in etwa V-förmig erweitern.

Zugeordnet einer jeden Eckzone des im Wesentlichen achteckigen Oberteils 10 und somit mittig zwischen zwei benachbarten Wickellcernschuhen 16 ist eine weitere, hier jedoch schlitzartig mit gleichbleibender Breite sich zum freien Ende der Rückwand 14 hin sich öffnende Durchführausnehmung 25 vorgesehen, welche sich gleichfalls bis zur Fußlinie der Rückwand 14 erstreckt.

Die durch die Ausformung der Durchführungsausnehmungen 24 und 25 freigestellten Rückwand-Abschnitte tragen vereinzelt radial außen angeformte, hakenartig in Richtung auf den Kragen 15 weisende Wickeldrahtführungselemente 26. Im Überdeckungsbereich zu diesen Wickeldrahtführungselementen 26 ist der Kragen 15 unterbrochen. Die dieser Unterbrechung zugeordneten Enden der Kragenabschnitte weisen nach oben, das heißt in Richtung auf die Wickeldrahtführungselemente 26 weisende Wickeldrahtbeabstandungsrippen 27 auf.

Das, wie auch das Unterteil 11 bevorzugt im Kunststoffspritzverfahren hergestellte Oberteil 10 trägt des Weiteren einen angeformten Anschlussstecker 28. Dieser ist über einen Verbindungsabschnitt 29 mit dem Oberteil 10 verbunden, welcher Verbindungsabschnitt 29 außenseitig des Oberteils 10 auf Höhe des Kragens 15 angeformt ist und sich von dem Kragen 15 ausgehend zunächst in radialer Richtung erstreckt, woran sich ein in der Ebene des Verbindungsabschnitts 29 abgekröpfter Abschnitt anschließt. An Letzterem ist endseitig senkrecht zu diesem ausgerichtet der Anschlussstecker 28 angeformt.

Dieser Anschlussstecker 28 ist mit sechs metallischen Kontaktelementen 30 in Form von Scherenkontakten ausgestattet.

Auf dem Verbindungsabschnitt 29 sind in dem Ausführungsbeispiel fünf unterschiedliche Höhen aufweisende Wickeldrahtumlenkelemente 31 ausgebildet.

Weiter sind in dem, dem Verbindungsabschnitt 29 bzw. dem Anschlussstecker 28 zugeordneten Bereich eines Abschnitts der Rückwand 14 und im Bereich zweier benachbarter Abdeckschilde 21 in Achsrichtung über die freie Randkante der Rückwand 14 bzw. der Abdeckschilde 21 frei abragende Befestigungsnoppen 32 angeformt.

Das Unterteil 11 des Statorabdeckkörpers 9 ist im Wesentlichen, das heißt insbesondere hinsichtlich der Grundrissgestaltung der Wickelkernschuhe 16, weiter bezüglich des Kragens 15 sowie der Rückwand 14, der Abdeckschilde 21 und der Abdeckwände 22 spiegelbildlich zum Oberteil 10 ausgeformt. Im Unterschied zum Oberteil 10 hingegen sind sowohl die Rückwand 14 als auch der Kragen 15 durchgehend, das heißt ohne partielle Unterbrechungen ausgeformt.

Die freien Enden der U-Schenkel 18, der Abdeckwand 22 und der beiden zugewandten Flügel der Abdeckschilde 21 zweier benachbarter Wickelkernschuhe 16 bilden zur überlappenden Zuordnung zu den Stufen 23 des Oberteils 10 jeweils eine Negativstufe 33 aus, welche wie auch im Oberteil 10 durch Materialreduzierung erreicht ist. Auch diese Negativstufe 33 weist eine entsprechend der Stufe 23 angepasste in Achsrichtung gemessene Länge von ca. 0,5 mm auf, wobei der hierdurch ausgeformte Versatz der halben Materialstärke entspricht.

Auch bei dem Unterteil 11 besitzen die beiden parallel zueinander beabstandeten U-Schenkel 18 und der diese verbindende, in der Ebene der Fußlinie sich erstreckende U-Steg 19 eine Tiefe, welcher der radialen Tiefe eines zuordbaren Wickelkerns 20 des Statorkerns 8 entspricht. Auch der Abstand der U-Schenkel 18 sowie der Abstand des U-Stegs 19 bis zur Ebene der U-Öffnung 17 ist an den Querschnitt eines Wickelkerns 20 angepasst.

Oberteil 10 und Unterteil 11 des Statorabdeckkörpers 9 werden vor dem Wickeln der Statorspulen 3 gegensinnig in axialer Richtung in den Statorkern 8 eingeschoben unter Überlappung der Stufen 23 und Negativstufen 33, wobei zufolge dieser stufenförmigen, variablen Überlappung Höhentoleranzen des Statorkerns ausgeglichen werden können.

Der eingeschobene zweigeteilte Statorabdeckkörper 9 überfängt die Wickelkerne mittels der Wickelkernschuhe 16, wobei sich der U-Steg 19 des Oberteils 10 auf einer der sich gegenüberliegenden axialen Stirnflächen 34 des Wickelkerns 20 und der U-Steg 19 des Unterteils 11 auf der anderen Stirnfläche 34 des Wickelkerns 20 abstützt. Die U-Schenkel 18 sowohl des Oberteils 10 als auch des Unterteils 11 flankieren die Wickelkerne 20.

Im zusammengesteckten Zustand des zweigeteilten Statorabdeckkörpers 9 umschließen die Abdeckschilde 21 des Oberteils 10 und des Unterteils 11 ein Fenster 35, in welchem die dem Rotor 2 zugewandte Kernfläche 36 des Wickelkerns 20 freiliegt.

Die Kragen 15 des Oberteils 10 und des Unterteils 11 dienen zur Einstecktiefenbegrenzung der beiden Teile des Statorabdeckkörpers 9. Nach einem Einstecken von Oberteil 10 und Unterteil 11 in den Statorkern 8 liegen die Kragen 15 ober- bzw. unterseitig auf der zugeordneten Oberfläche des Statorkerns 8 auf.

Der eingesteckte Statorabdeckkörper 9 wird mittels einer Wickelmaschine mit Statorspulen 3 versehen, wobei in einem ersten Schritt eine erste Hälfte der Statorspulen 3 gleichzeitig gewickelt wird, so in dem Ausführungsbeispiel vier nebeneinander in Umfangsrichtung angeordnete Statorspulen 3. Die zum Wickeln zugeführten Wicklungsdrähte 37 werden hierzu zunächst auf der den Wickelkernschuhen 16 abgewandten Seite der Rückwand 14 entlang dieser geführt und durch die talförmigen, mittig in den Wickellcernschuhen 16 ausgebildeten Durchftihrausnehmungen 24 in den Wickelbereich verbracht. Nach Aufbringen der einzelnen Statorwicklungen 38 zur Bildung einer Statorspule 3 werden die Wicklungsdrähte 37 der nunmehr erstellten vier Statorspulen 3 durch die weiteren Durchführungsausnehmungen 25 wiederum zur rückwärtigen Seite der Rückwand 14 verbracht, wonach sich die Wickelmaschine um 180° um die Achse x gedreht den weiteren vier zu wickelnden Statorspulen 3 zuwendet, dies ohne Durchtrennung der von den ersten vier, bereits fertiggestellten Statorspulen 3 kommenden Wicklungsdrähten 37. Die Herstellung der weiteren vier Statorspulen 3 erfolgt in gleicher Weise wie die ersten vier.

Demzufolge sind die Statorspulen 3 paarweise miteinander verbunden. Konkret bilden hierbei stets zwei sich diametral gegenüberliegende Statorspulen 3 ein mit demselben Wicklungsdraht 37 gewickeltes Statorspulenpaar.

Die außen an der Rückwand 14 entlang geführten Wicklungsdrähte 37 sind an einem Abrutschen von der Rückwand 14 durch die Wicklungsdrahtführungselemente 26 gehindert. Zudem ist durch die auf dem Kragen 15 aufgebrachten Wickeldrahtbeabstandungsrippen 27 ein Sicherheitsabstand der Wicklungsdrähte 37 zum Statorkern 8 gewährleistet.

Die Enden der vier, die Statorspulen 3 ausformenden Wicklungsdrähte 37 sind unter Umlenkung mittels der auf dem Verbindungsabschnitt 29 angeordneten Wickeldrahtumlenkelemente 31 zum Anschlussstecker 28 geführt und dort an den Kontaktelementen 30 befestigt. Wie aus den Darstellungen zu erkennen, sind sechs Kontaktelemente 30 vorgesehen zur Aufnahme von 8 Wickeldrahtenden. So sind an zwei durch die Kontaktelemente 30 gebildeten Steckerplätzen jeweils zwei Wickeldrahtenden angeschlossen.

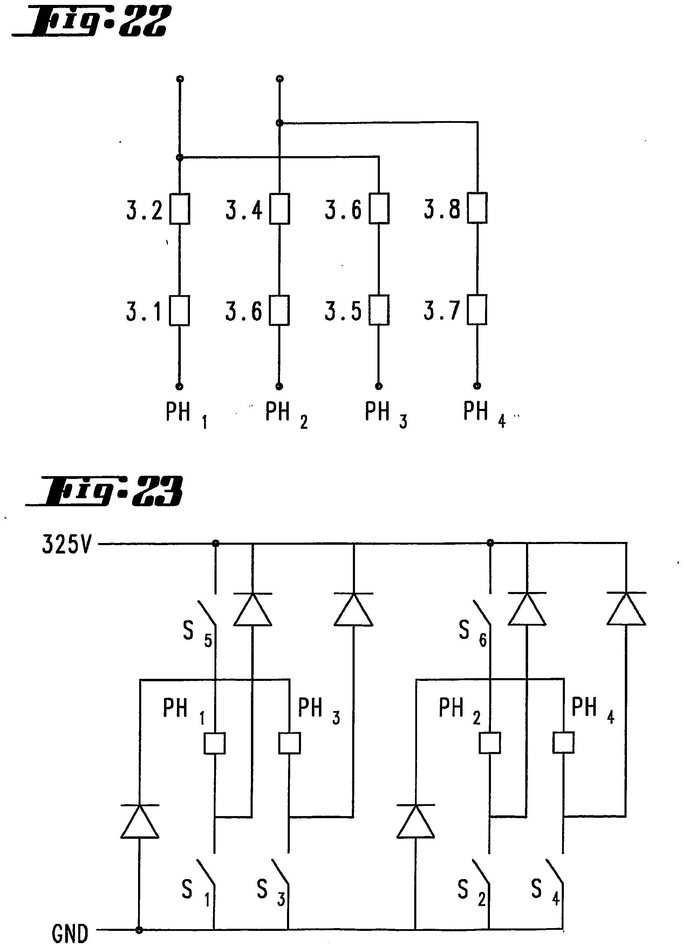

Fig. 22 zeigt schematisch das Anschlussschema der einzelnen Statorspulen. So sind an der Phase PH₁ die auf dem Statorabdeckkörper 9 sich gegenüberliegenden Statorspulen 3.1 und 3.2 in Reihe geschaltet, wobei der von der Statorspule 3.2 abführende Wickeldraht 37 gleichfalls verbunden ist mit dem Abgang der der Phase PH₃ zugeordneten Statorspulen 3.5 und 3.6. Ebenso sind auch die Statorspulenpaare 3.3, 3.4 der Phase PH₂ und 3.7, 3.8 der Phase PH₄ einendig zusammengefasst. Demzufolge ergeben sich bei acht Spulen 3 und demnach vier Phasen insgesamt sechs Wicklungsdrahtenden, die an dem Anschlussstecker 28 befestigt sind.

In Fig. 23 ist schematisch die Schaltung der einzelnen Phasen dargestellt. Diese werden über Schalter aktiviert, wobei mit Bezug auf die Motorverschaltung in Fig. 22 jedem Wicklungsdrahtende bzw. jedem Kontaktelement 30 des Anschlusssteckers 28 ein Schalter S₁ bis S₆ zugeordnet ist. So wird beispielsweise durch Schließen der Schalter S₁und S₅ die Phase PH₁ geschaltet, wonach, gegebenenfalls zeitlich überlappend die Phase PH₂ durch Schalten der Schalter S₂ und S₆ angesteuert wird. Während die Phase PH₂ noch aktiv ist, fällt die Phase PH₁ ab, dies durch Öffnen zumindest des Schalters S₁, wonach die Phase PH₃ durch Schließen der Schalters S₃ und des Schalters S₅ aktiviert wird. Entsprechend wird bei der Phase PH₄ verfahren.

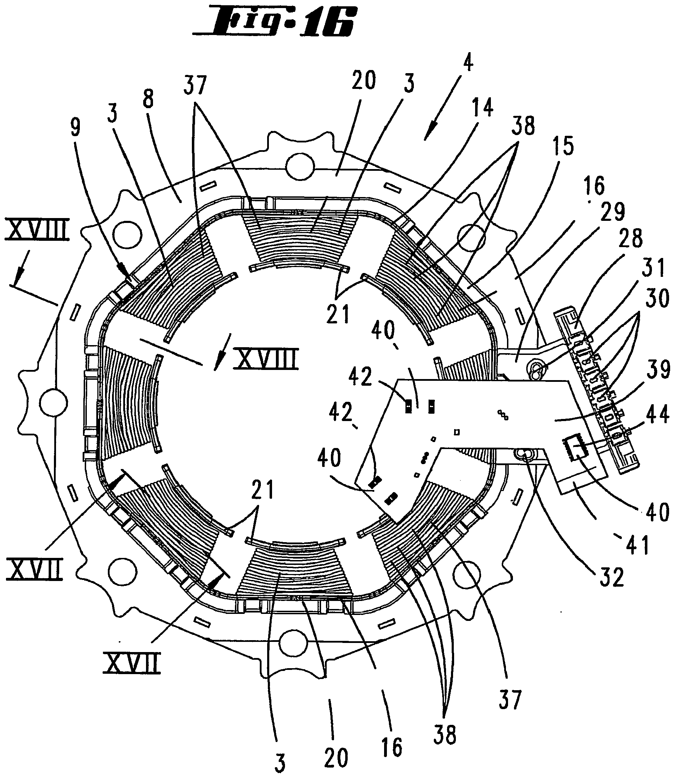

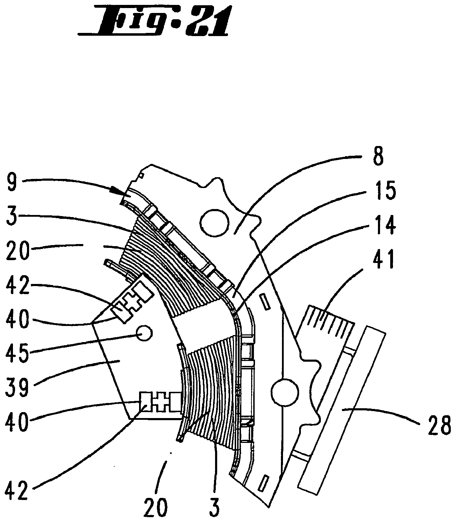

Wie weiter insbesondere aus den Darstellungen in den Fig. 16 und 21 zu erkenne, ist eine Platine 39 als Träger von Elektronikbauteilen 40 vorgesehen. Diese ist an dem Statorabdeckkörper 9 in unmittelbarer Nachbarschaft zum Anschlussstecker 28 mittels der erwähnten Befestigungsnoppen 32 befestigt, dies bevorzugt durch Schmelzumformbefestigen.

Die Platine 39 weist einen etwa C-förmigen Grundriss auf, wobei ein C-Schenkel außerhalb des Statorabdeckkörpers 9, etwa parallel ausgerichtet zum Anschlussstecker 28 frei kragend über den Verbindungsabschnitt 29 ragt und der andere C-Schenkel radial nach innen über die Wickelkernschuhe 16 hinaus in den Bereich des Rotors 2 einragt. Der die beiden C-Schenkel der Platine 39 verbindende C-Steg ist in radialer Richtung angeordnet. Die durch Schmelzumformung die Platine 39 an dem Statorabdeckkörper 9 halternden Befestigungsnoppen 32 durchsetzen die Platine 39 in entsprechend angeordneten Durchbrechungen.

Der nach außen, das heißt in Richtung auf den Anschlussstecker 28 ragende Abschnitt der Platine ist unterseitig, das heißt in Richtung auf den Statorkern 8 weisend mit einer Steckeraufnahme 41 zur Aufnahme eines mit einem entsprechenden Stecker versehenen Anschlusskabels versehen.

Der radial nach innen in den Rotorbereich einragende Abschnitt der Platine 39 trägt unterseitig, das heißt in Richtung auf den Rotor gewandt zwei umfangsmäßig um 45° zueinander beabstandete Lichtschranken 42, bevorzugt Gabellichtschranken, wobei weiter die Lichtschranken jeweils in Umfangsrichtung betrachtet mittig eines zugeordneten Wickelkerns 20 angeordnet sind. Diese Lichtschranken 42 werden im Motorbetrieb durch Geberausformungen 43 der Geberscheibe 5 durchfahren, zufolge dessen mittels der ermittelten und ausgewerteten Impulse die momentane Rotorstellung erfasst werden kann. Die Signale werden von einer auf der Platine 39 angeordneten Sensorik 44 ausgewertet.

Zudem trägt die Platine 39 gleichfalls in dem in den Rotorbereich hineinragenden Abschnitt unterseitig und im Wesentlichen umfangsmäßig mittig zwischen den Lichtschranken 40 einen Temperaturfühler 45, welcher radial betrachtet außerhalb des Durchtrittsbereichs der Geberausformungen 43 der Rotor-Geberscheibe 5 positioniert ist. Dieser Temperaturfühler dient zur Erfassung der Motortemperatur, wozu eine von dem Temperaturfühler 45 gemessene Lufttemperatur zur Erfassung der Motortemperatur herangezogen ist.

Ein weiterer Vorteil der erfindungsgemäßen Anordnung der Platine 39 im Bereich des Anschlusssteckers 28 besteht darin, dass die Platine 39 durch den sich höhenmäßig über diese erstreckenden Anschlussstecker 28 in einer geschützten Verstecktlage sitzt. Zudem ergibt sich eine kurze Toleranzkette zum Stator 4, dem zufolge kein Ausrichten der Platine 39 aufgrund der hohen Positionsgenauigkeit erforderlich ist.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Reluktanzmotor (1) mit einem Rotor (2) und einem Stator (4), wobei der Stator (4) Wickelkerne (20) des Statorkerns (8) umgebende, einzelne Statorspulen (3), gebildet durch Statorwicklungen (38) aufweist und der Zwischenraum zwischen den Statorspulen (3) durch Statorabdeckkörper (9) ausgefüllt ist, wobei weiter ein Statorabdeckkörper (9) in axialer Richtung in den Statorkern (8) eingeschoben ist, wobei der Statorabdeckkörper (9) zweiteilig ausgebildet ist und beide Teile (10,11) gegensinnig in axialer Richtung in den Statorkern (8) eingeschoben sind, unter gegenseitiger Überlappung der einander zugeordneten Enden, **dadurch gekennzeichnet, dass** außenseitig der Rückwand (14) eines Statorabdeckkörpers ein umlaufender, partiell unterbrochener Kragen (15) und eine Wickeldrahtführung ausgebildet ist, wobei hierzu hakenartige, in Richtung auf den Kragen (15) weisende Wickeldrahtführunaselemente (26) vorgesehen sind, wobei im Überdeckungsbereich zu diesen Wickeldrahtführunaselementen (26) der Kragen (15) unterbrochen ist, und die dieser Unterbrechung zugeordneten Enden der Kraaenabschnitte nach oben, in Richtung auf die Wickeldrahtführungselemente, weisende Wickeldraht-Beabstandunasrippen (27) aufweisen.

2. Reluktanzmotor nach Anspruch 1, **dadurch gekennzeichnet, dass** ein Wickelkern (20) an seinen gegenüberliegenden axialen Stirnflächen (34) durch jeweils einen der Statorabdeckkörper (9) überfangen ist.

3. Reluktanzmotor nach einem der vorhergehenden Ansprüche, **dadurch gekennzeichnet, dass** ein Statorabdeckkörper (9) als Oberteil (10) ausgebildet ist, bei welchem in einer den Statorwicklungen (38) zugeordneten Rückwand (14) eine Durchführausnehmung (24) für den Wickeldraht (37) ausgebildet ist.

4. Reluktanzmotor nach einem der vorhergehenden Ansprüche, **dadurch gekennzeichnet, dass** zwischen zwei Statorspulen (3) in der Rückwand (14) des Statorabdeckkörpers (9) eine Durchführausnehmung (25) ausgebildet ist.

5. Reluktanzmotor nach einem der vorhergehenden Ansprüche, **dadurch gekennzeichnet, dass** die Wickeldrahtführung aus einer Vielzahl von gesonderten Wickeldrahtführungselementen (26) besteht.

6. Reluktanzmotor nach einem der Ansprüche 3 bis 5, **dadurch gekennzeichnet, dass** an das Oberteil (10) ein Anschlussstecker (28) für die Statorspulen (3) angeformt ist.

7. Reluktanzmotor nach Anspruch 6, **dadurch gekennzeichnet, dass** der Anschlussstecker (28) eine Vielzahl von metallischen Kontaktelementen (30) aufweist.

8. Reluktanzmotor nach einem der Ansprüche 6 oder 7, **dadurch gekennzeichnet, dass** der Anschlussstecker (28) weniger Kontaktelemente (30) als der Stator (4) Statorspulen (3) aufweist.

9. Reluktanzmotor nach einem der Ansprüche 3 bis 8, **dadurch gekennzeichnet, dass** das Oberteil (10) Befestigungsnoppen (32) aufweist zum Schmelzumformbefestigen beispielsweise einer Steuerungsplatine (39).

10. Reluktanzmotor nach einem oder mehreren der vorhergehenden Ansprüche, **dadurch gekennzeichnet, dass** die Statorabdeckkörper (9) jeweils eine Einstecktiefenbegrenzung aufweisen.

11. Reluktanzmotor nach einem der Ansprüche 3 bis 10, **dadurch gekennzeichnet, dass** ein Statorabdeckkörper (9) als Unterteil (11) ausgebildet ist und dass das Unterteil (11) in jeder Statorkernstellung in das Oberteil (10) einpasst.

## Claims

1. Reluctance motor (1) with a rotor (2) and a stator (4), the stator (4) having individual stator coils (3), which surround winding cores (20) of the stator core (8) and are formed by stator windings (38), and the intermediate space between the stator coils (3) being filled by stator covering bodies (9), a stator covering body (9) also being pushed into the stator core (8) in an axial direction, the stator covering body (9) being formed in two parts and both parts (10, 11) being pushed in opposite axial directions into the stator core (8), with mutual overlapping of the ends that are associated with one another, **characterized in that** a circumferential, partially-interrupted collar (15) and a winding wire guide is formed on the outside of the rear wall (14) of a stator covering body, hook-like winding wire guiding elements (26) that point in the direction of the collar (15) being provided for this, the collar (15) being interrupted in the regions in which it coincides with these winding wire guiding elements (26), and the ends of the collar portions that are associated with this interruption having winding wire spacing ribs (27) that point upwards, in the direction of the winding wire guiding elements.

2. Reluctance motor according to Claim 1, **characterized in that** a winding core (20) is reached over at each of its opposite axial end faces (34) by one of the stator covering bodies (9).

3. Reluctance motor according to either of the preceding claims, **characterized in that** a stator covering body (9) is formed as an upper part (10), a lead-through cut-out (24) for the winding wire (37) being formed in a rear wall (14) associated with the stator windings (38).

4. Reluctance motor according to any of the preceding claims, **characterized in that** a leadthrough cut-out (25) is formed between two stator coils (3) in the rear wall (14) of the stator covering body (9).

5. Reluctance motor according to any of the preceding claims, **characterized in that** the winding wire guide comprises a multiplicity of separate winding wire guiding elements (26).

6. Reluctance motor according to any of Claims 3 to 5, **characterized in that** on the upper part (10) there is also moulded-on a connection plug (28) for the stator coils (3).

7. Reluctance motor according to Claim 6, **characterized in that** the connection plug (28) has a multiplicity of metallic contact elements (30).

8. Reluctance motor according to either of Claims 6 and 7, **characterized in that** the connection plug (28) has fewer contact elements (30) than the stator (4) has stator coils (3).

9. Reluctance motor according to any of Claims 3 to 8, **characterized in that** the upper part (10) has securing studs (32) for securing a controller board (39), for example, by melt transformation.

10. Reluctance motor according to any of the preceding claims, **characterized in that** the stator covering bodies (9) in each case have a depth-of-insertion limitation.

11. Reluctance motor according to any of Claims 3 to 8, **characterized in that** a stator covering body (9) is formed as a lower part (11) and **in that** the the lower part (11) fits into the upper part (10) in every position of the stator core.

## Revendications

1. Moteur à reluctance variable (1) avec un rotor (2) et un stator (4), le stator (4) comprenant des bobines de stator (3) individuelles entourant des noyaux d'enroulement (20) du noyau de rotor (8), constituées d'enroulements de stator (38) et l'interstice entre les bobines du stator (3) est rempli d'éléments de recouvrement du stator (9), un élément de recouvrement du stator (9) étant inséré dans la direction axiale dans le noyau de stator (8), l'élément de recouvrement du stator (9) étant conçu en deux parties et les deux parties (10, 11) étant insérées dans le sens inverse l'un par rapport à l'autre dans la direction axiale dans le noyau du stator (8), les extrémités correspondantes se superposant mutuellement, **caractérisé en ce que**, à l'extérieur de la paroi arrière (14) d'un élément de recouvrement du stator se trouvent un col (15) circulaire partiellement interrompu et un guidage de fils d'enroulement, des éléments de guidage de fils d'enroulement (26) en forme de crochets et orientés vers le col (15) étant prévus pour cela, le col (15) étant interrompu dans la zone de recouvrement de ces éléments de guidage de fils d'enroulement (26), et les extrémités des sections du col correspondant à cette interruption comprenant des nervures d'écartement des fils d'enroulement (27) orientées vers le haut en direction des éléments de guidage des fils d'enroulement.

2. Moteur à reluctance variable selon la revendication 1, **caractérisé en ce qu'**un noyau d'enroulement (20) est doublé, au niveau de ses surfaces frontales axiales opposées (34) par un des éléments de recouvrement du stator (9).

3. Moteur à reluctance variable selon l'une des revendications précédentes, **caractérisé en ce qu'**un élément de recouvrement de stator (9) est conçu comme une partie supérieure (10), dans laquelle, dans une paroi arrière (14) correspondant aux enroulements du stator (38), un évidement de passage (24) est réalisé pour le fil d'enroulement (37).

4. Moteur à reluctance variable selon l'une des revendications précédentes, **caractérisé en ce que**, entre deux bobines de stator (3), dans la paroi arrière (14) de l'élément de recouvrement du stator (9), un évidement de passage (25) est réalisé.

5. Moteur à reluctance variable selon l'une des revendications précédentes, **caractérisé en ce que** le guidage des fils d'enroulement est constitué d'une pluralité d'éléments de guidage de fils d'enroulement (26) séparés.

6. Moteur à reluctance variable selon l'une des revendications 3 à 5, **caractérisé en ce que** sur la partie supérieure (10) est surmoulé un connecteur (28) pour les bobines du stator (3).

7. Moteur à reluctance variable selon la revendication 6, **caractérisé en ce que** le connecteur (28) comprend une pluralité d'éléments de contact métalliques (30).

8. Moteur à reluctance variable selon la revendication 6 ou 7, **caractérisé en ce que** le connecteur (28) comprend moins d'éléments de contact (30) que les bobines (3) du stator (4).

9. Moteur à reluctance variable selon l'une des revendications 3 à 8, **caractérisé en ce que** la partie supérieure (10) comprend des boutons de fixation (32) pour une fixation par déformation par fusion, par exemple, d'une platine de commande (39).

10. Moteur à reluctance variable selon l'une ou plusieurs des revendications précédentes, **caractérisé en ce que** les éléments de recouvrement du stator (9) comprennent chacun une limitation de la profondeur d'insertion.

11. Moteur à reluctance variable selon l'une ou plusieurs des revendications 3 à 10, **caractérisé en ce qu'**un élément de recouvrement du stator (9) est conçu comme une partie inférieure (11) et **en ce que** la partie inférieure (11) s'adapte dans la partie supérieure (10) dans chaque position du noyau de stator.
